# EUROPEAN PATENT SPECIFICATION

(11) **EP 4 246 857 B1**
(45) Date of publication and mention of the grant of the patent: **01.07.2026**
(21) Application number: 23162317.4
(22) Date of filing: 16.03.2023
(51) Int. Cl.: H04L 5/00, H04L 27/26, H04J 11/00

(54) **METHOD TO USE A SINGLE SIGNAL PROCESSING CHAIN FOR MULTIPLE NB-IOT CELLS ON CONSECUTIVE CARRIERS**
VERFAHREN ZUR VERWENDUNG EINER EINZIGEN SIGNALVERARBEITUNSKETTE FÜR MEHRERE NB-IOT-ZELLEN AUF AUFEINANDERFOLGENDEN TRÄGERN
PROCÉDÉ D'UTILISATION D'UNE UNIQUE CHAÎNE DE TRAITEMENT DE SIGNAL POUR MULTIPLES CELLULES NB-IOT SUR PORTEUSES CONSÉCUTIVES

(30) Priority: 17.03.2022 IN 202221014871; 10.03.2023 US 202318181633
(43) Date of publication of application: 20.09.2023
(73) Proprietor: Mavenir Systems, Inc., Richardson, TX 75081 (US)
(72) Inventor: LOURDU RAJA, Charles Santhosam, 560048 Bangalore (IN); ARVAPALLY, RadhaKrishna, 560077 Bangalore (IN)
(74) Representative: Studio Torta S.p.A.

(56) References cited:
- US-B2- 11 265 726
- NOKIA ET AL: "Channel Raster For Multiple Standalone NB-IoT Carriers", vol. RAN WG4, no. Spokane, Washington, USA; 20170403 - 20170407, 3 April 2017 (2017-04-03), XP051246941, Retrieved from the Internet <URL:http://www.3gpp.org/ftp/Meetings_3GPP_SYNC/RAN4/Docs/> [retrieved on 20170403]
- Y-P ERIC WANG ET AL: "A Primer on 3GPP Narrowband Internet of Things (NB-IoT)", INTERNET CITATION, 13 June 2016 (2016-06-13), XP002772811, Retrieved from the Internet <URL:https://arxiv.org/ftp/arxiv/papers/1606/1606.04171.pdf> [retrieved on 20160613]
- HYUNG G MYUNG ET AL: "Single carrier FDMA for uplink wireless transmission", IEEE VEHICULAR TECHNOLOGY MAGAZINE, IEEE, US, vol. 1, no. 3, September 2006 (2006-09-01), pages 30 - 38, XP011165321, ISSN: 1556-6072, DOI: 10.1109/MVT.2006.307304

## Description

### BACKGROUND OF THE INVENTION

The present disclosure relates to Radio Access Network (RAN) for 4G- and 5G-based mobile networks, and relates more particularly to interfaces (e.g., air and/or physical interfaces) for Narrowband Internet of Things (NB-loT) cells.

Currently, when multiple NB-loT standalone cells are served by an NB-loT Evolved Node B (eNodeB) of a RAN, at least two issues must be addressed. First, the NB-loT eNodeB needs to utilize multiple digital filters to avoid interference between consecutive NB-loT standalone cells. Second, when there are multiple (e.g., number N) consecutive NB-loT standalone cells, each NB-loT standalone cell is processed independently, i.e., the RAN needs to use N downlink (DL) signal chains and N uplink (UL) signal chains (e.g., utilizing Fast Fourier Transform (FFT) and/or Inverse Fast Fourier Transform (iFFT)). These conventional solutions require substantial capital expenditures and heightened complexity of RAN operation.

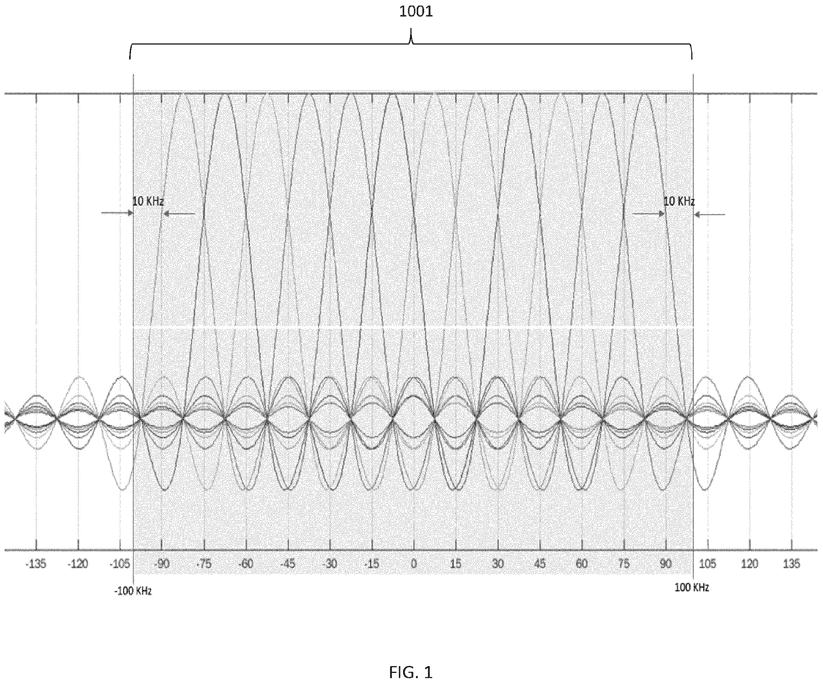

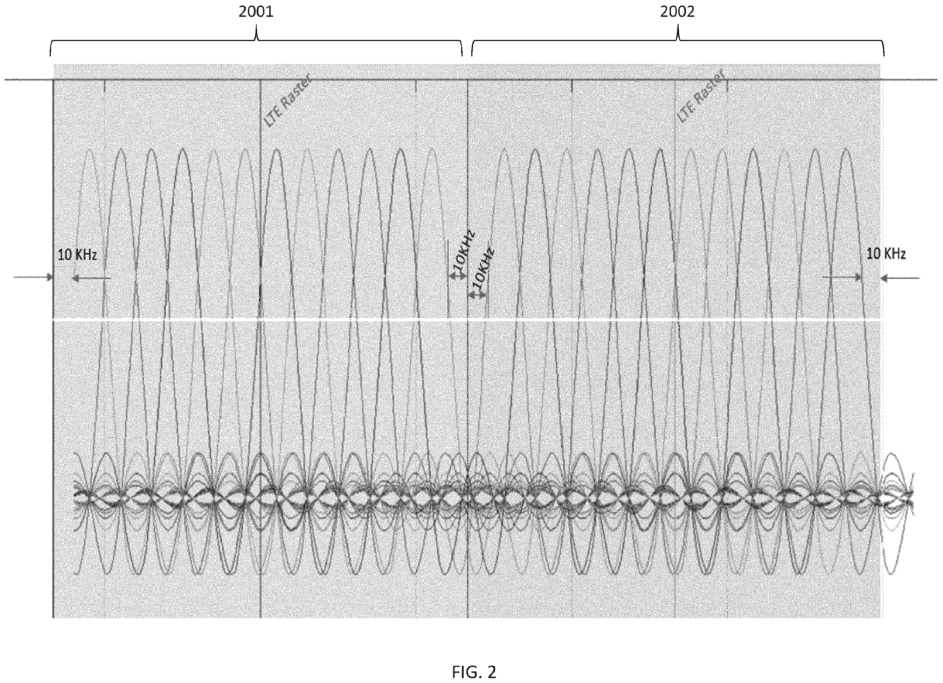

FIG. 1 is a diagram illustrating an example NB-loT standalone cell 1001 of 200 KHz containing i) 12 sub carriers occupying 180KHz and ii) 10KHz guard on the two ends of the cell. As shown in FIG. 1, all 12 sub carriers are orthogonal to each other, i.e., at the peak of a given sub carrier, all other 11 subcarriers are zero, and vice versa. FIG. 2 is a diagram illustrating an example embodiment of two consecutive NB-loT standalone cells 2001 and 2002 each spanning 200 KHz and each containing 12 sub carriers. As can be seen in FIG. 2, within each NB-loT standalone cell 2001 or 2002, the 12 sub carriers of the respective cell are orthogonal to each other, but the subcarriers of NB-loT standalone cell 2001 are not orthogonal to the subcarriers of neighboring NB-loT standalone cell 2002, which leads to interference between the NB-loT standalone cells 2001 and 2002. In this case, the conventional solution is for the RAN to use filters between NB-loT standalone cells 2001 and 2002. In addition, since the subcarriers of the cell 2001 are not aligned with the subcarriers of the cell 2002, the RAN can't use the same FFT/iFFT for multiple NB-loT standalone cells.

Document by Nokia et al., "Channel Raster for Multiple Standalone NB-loT Carriers", 3GPP DRAFT; R4-1703804, vol. RAN WG4, no. Spokane, Washington, USA, 3 April 2017, provides analysis and simulation results to show the benefits of allowing a deviation from the 100 kHz channel raster position for standalone NB-loT carrier.

Document by Hyung G Myung et al., "Single carrier FDMA for uplink wireless transmission", IEEE Vehicular Technology Magazine, Vol. 1, No. 3, pp. 30-38, September 2006, provides an overview of SC-FDMA. We also analyze the effects of subcarrier mapping on throughput and PARR.

However, the above-mentioned issues are not solved.

Therefore, there is a need for a solution that optimizes interference reduction while reducing cost and complexity of RAN operation when multiple NB-loT standalone cells are served by an NB-loT eNodeB.

### SUMMARY OF THE INVENTION

The present invention relates to a method of processing multiple Narrowband Internet of Things on consecutive carriers by a Radio Access Network, RAN, for one of 4G or 5G mobile network, as defined in claim 1.
According to the claimed invention, a method is presented in which multiple NB-loT cells are aligned to make all sub carriers across cells to be mutually orthogonal, wherein for a sequence of NB-loT cells, every third NB-loT cell is grouped into a single group, wherein all sub carriers of the NB-loT cells in the single group are mutually orthogonal. A single fast Fourier transform (FFT) or inverse fast Fourier transform (iFFT) can be used, e.g., by a radio access network (RAN), to process multiple NB-loT cells in the single group formed from every third NB-loT cell.

The following examples are not part of the claimed invention, but are discussed to provide full understanding of the claimed invention.

According to an example embodiment of the present disclosure, at least one first NBIOT cell is shifted relative to an adjacent second NBIOT cell to align all sub carriers of the first and second NBIOT cells to be mutually orthogonal.

According to an example of the present disclosure, a method is presented in which, for two sequential and adjacent NB-loT standalone cells, the second NB-loT standalone cell following the first NB-loT standalone cell is left-shifted relative to the first NB-loT standalone cell by 5 KHz to make all subcarriers of the first and second NB-loT standalone cells to be mutually orthogonal.

According to an example of the present disclosure, in the case of two sequential and adjacent NB-loT standalone cells for which the second NB-loT standalone cell following the first NB-loT standalone cell is left-shifted relative to the first NB-loT standalone cell by 5 KHz, a method is presented in which an extra (e.g., 13^{th}) subcarrier is provided in the common guard region.

According to an example of the present disclosure, a method is presented in which, for three sequential and adjacent NB-loT standalone cells, the following relative shifts for the cells are provided: the first NB-loT standalone cell is right-shifted relative to the second NB-loT standalone cell by 5 KHz, and the third NB-loT standalone cell is left-shifted relative to the second NB-loT standalone cell by 5 KHz to make all subcarriers of the first, second and third NB-loT standalone cells to be mutually orthogonal. In this example embodiment, the following configurations for the guard regions are provided: the combined guard region between the first and second NB-loT standalone cells is 15KHz; and the combined guard region between the second and third NB-loT standalone cells is 15KHz.

According to an example of the present disclosure, the above-described configurations for the set of three sequential and adjacent NB-loT standalone cells can be repeated to provide six sequential and adjacent NB-loT standalone cells. In this example embodiment, the combined guard region between the third NB-loT standalone cell and the fourth NB-loT standalone cell is 30KHz.

According to an example of the present disclosure, a method is presented in which, for three sequential and adjacent NB-loT standalone cells, the following configurations for the cells are provided: the first NB-loT standalone cell is right-shifted relative to the second NB-loT standalone cell by 5 KHz, and the third NB-loT standalone cell is left-shifted relative to the second NB-loT standalone cell by 5 KHz. In this example embodiment, an extra (e.g., 13^{th}) subcarrier is provided in the combined guard regions i) between the first and second NB-loT standalone cells, and ii) between the second and third NB-loT standalone cells.

According to an example of the present disclosure, the above-described configurations for the set of three sequential and adjacent NB-loT standalone cells containing an extra subcarrier in the combined guard region between two adjacent NB-loT standalone cells can be repeated one or more times to provide, e.g., six sequential and adjacent NB-loT standalone cells. In this example embodiment, the combined guard region between the third NB-loT standalone cell and the fourth NB-loT standalone cell is 15KHz.

According to an example of the present disclosure, for the above-described configurations for the six sequential and adjacent NB-loT standalone cells containing extra (e.g., 13^{th}) subcarriers in the combined guard regions, e.g., i) between the first and second NB-loT standalone cells, and ii) between the second and third NB-loT standalone cells, a further extra (e.g., 14^{th}) subcarrier is provided between the third and fourth NB-loT standalone cells.

According to an embodiment of the present disclosure, a method is presented in which a single lower physical layer (L-Phy) is utilized for multiple NB-loT standalone carriers.

According to an example of the present disclosure, a method is presented in which the same fast Fourier transform (FFT) and/or inverse fast Fourier transform (iFFT) can be used for every third NB-loT standalone cell.

According to an embodiment of the claimed invention, a method is presented in which the same fast Fourier transform (FFT) and/or corresponding inverse fast Fourier transform (iFFT) is used by the RAN for processing every third NB-loT standalone cell. In this example embodiment, at least one of the following configurations is provided for a sequence of NB-IoT standalone cells sequentially positioned starting on the left: i) a first set of NB-loT standalone cells having sequence position numbers with quotient-1 of modulo-3 operation is processed by the RAN using at least one of a first FFT and a corresponding first iFFT; ii) a second set of NB-loT standalone cells having sequence position numbers with quotient-2 of modulo-3 operation is processed by the RAN using at least one of a second FFT and a corresponding second iFFT; and/or iii) a third set of NB-loT standalone cells having sequence position numbers with quotient-0 of modulo-3 operation is processed by the RAN using at least one of a third FFT and a corresponding third iFFT.

### BRIEF DESCRIPTION OF THE DRAWINGS

FIG. 1 is a diagram illustrating an example embodiment of an NB-loT standalone cell of 200 KHz with 12 sub carriers.
FIG. 2 is a diagram illustrating an example embodiment of two consecutive NB-loT standalone cells each spanning 200 KHz with 12 sub carriers.
FIG. 3 is a diagram illustrating an example embodiment of two consecutive NB-loT standalone cells with the second cell being left-shifted by 5KHz.
FIG. 4 is a diagram illustrating an example embodiment of six consecutive, equally spaced NB-loT cells with zero raster offset.
FIG. 5 is a diagram illustrating an example embodiment of six consecutive NB-loT cells with one of zero, +5KHz or -5KHz raster offset.
FIG. 6 is a diagram illustrating the combined guard regions between consecutive NB-loT cells shown in FIG. 5.
FIG. 7 illustrates a resource grid for 7 consecutive NB-loT standalone cells, which resource grid encompasses the configuration shown in FIG. 6.
FIG. 8 is a diagram illustrating an example embodiment of two consecutive NB-loT standalone cells for which an extra subcarrier in the common (or combined) guard region is utilized.
FIG. 9 is a diagram illustrating the combined guard regions in a sequence of six consecutive NB-loT cells for which an extra subcarrier in each combined guard region is utilized.
FIG. 10 illustrates a resource grid for 7 consecutive NB-loT standalone cells, which resource grid encompasses the configuration shown in FIG. 9.
FIG. 11 illustrates a resource grid for 7 consecutive NB-loT standalone cells, which resource grid deviates from the resource grid shown in FIG. 10 by the additional inclusion of one further subcarrier for every third NB-loT standalone cell.
FIG. 12 is a diagram illustrating an example embodiment in which the same FFT/iFFT is used by the RAN for processing every third NB-loT standalone cell in a sequence of consecutive NB-loT cells.

### DETAILED DESCRIPTION OF THE INVENTION

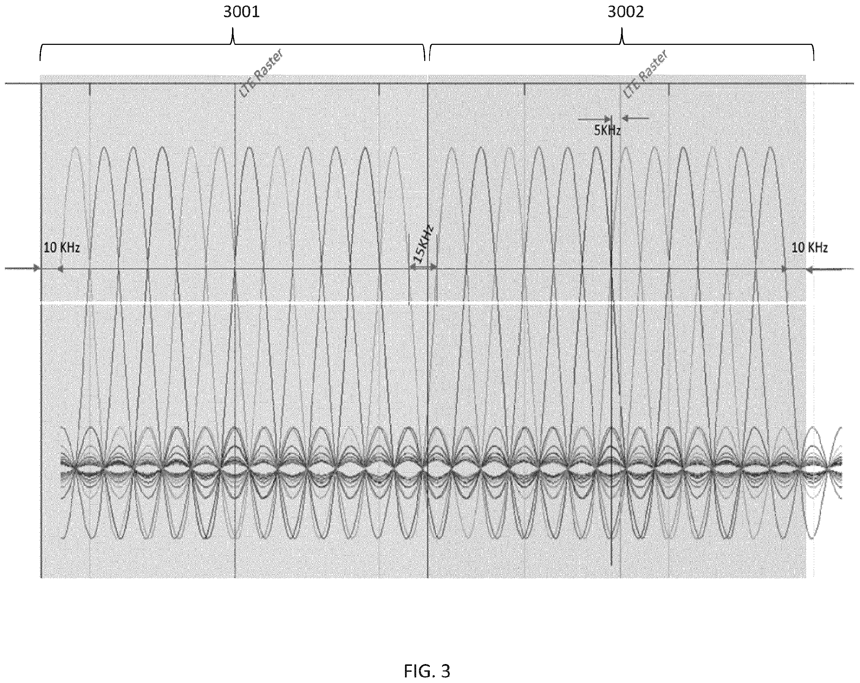

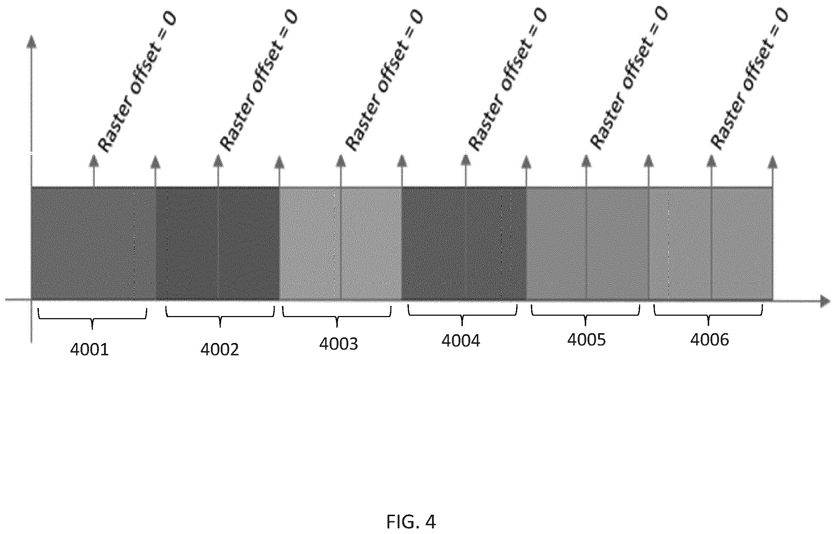

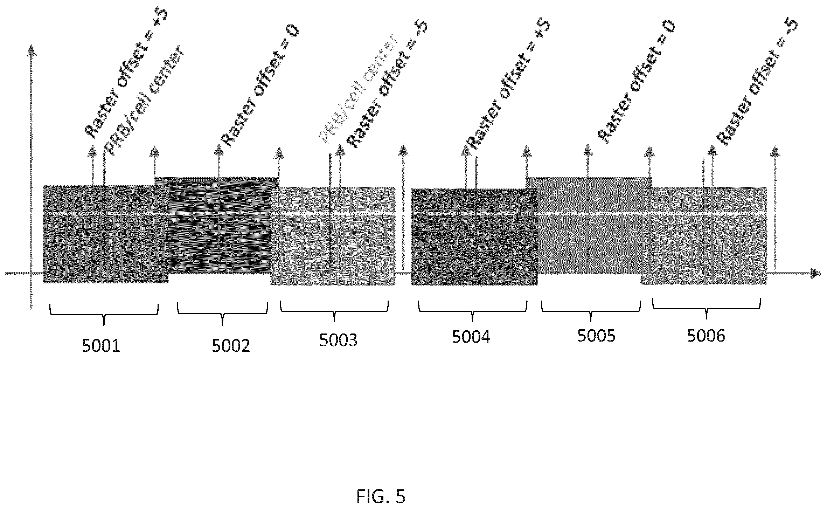

According to an example embodiment of the present disclosure, which is not part of the claimed invention, a method is presented in which, for at least two sequential and adjacent NB-IoT standalone cells, the second NB-loT standalone cell following the first NB-loT standalone cell is left-shifted relative to the first NB-loT standalone cell by 5 KHz to make all subcarriers of the first and second NB-loT standalone cells to be mutually orthogonal. This example embodiment is illustrated in FIG. 3, which shows two consecutive NB-loT standalone cells 3001 and 3002 each spanning 200 KHz and each containing 12 sub carriers, with the second NB-loT standalone cell 3002 left-shifted by 5KHz, resulting in a -5KHz raster offset for the second NB-loT standalone cell 3002 (the raster offset will be explained in further detail in connection with FIGS. 4 and 5). As can be seen from FIG. 3, all 24 subcarriers of both NB-loT standalone cells 3001 and 3002 are mutually orthogonal, which enables the RAN to use the same FFT and/or iFFT for both NB-loT standalone cells 3001 and 3002.

A comparison of FIGS. 4 and 5 illustrates the raster offset resulting from the 5KHz shifting of selected NB-loT standalone cells. FIG. 4 shows six equally spaced (e.g., each 200KHz) NB-loT cells 4001-4006 (each NB-loT standalone cell is represented by a box), with all NB-loT cells 4001-4006 having zero raster offset, as is the case in conventional arrangement of NB-loT cells. In contrast, FIG. 5 shows six NB-loT cells 5001-5006 which are each arranged with a 5KHz shift relative to at least one adjacent cell, in accordance with an example embodiment of the present disclosure. As shown in FIG. 5, NB-loT cells 5002 and 5005 are placed with 0 raster offset (the center of the cell, or physical resource block (PRB), has not shifted relative to the original position); NB-loT cells 5001 and 5004 are placed with +5KHz raster offset (the center of the cell or PRB has shifted 5KHz to the right of the original position); and NB-loT cells 5003 and 5006 are placed with -5KHz raster offset (the center of the cell or PRB has shifted 5KHz to the left of the original position). It should be noted that the NB-loT cell 5004 has shifted 5KHz to the right of the original position of the NB-IoT cell 5003 (and has right-shifted 10 KHz in total relative to the NB-loT cell 5003). In the configuration shown in FIG. 5, all the subcarriers in the six NB-loT cells 5001-5006 are aligned, and therefore all six NB-loT cells 5001-5006 can be processed using the same FFT and/or the same iFFT blocks in the RAN. In addition, the configuration shown in FIG. 5 eliminates the need for digital filters between the adjacent NB-IoT cells. Although 6 NB-loT cells are shown in FIG. 5, the alignment of the subcarriers is applicable to the group of first three NB-loT cells, the groups of first 4 NB-loT cells, or the group of first 5 NB-loT cells.

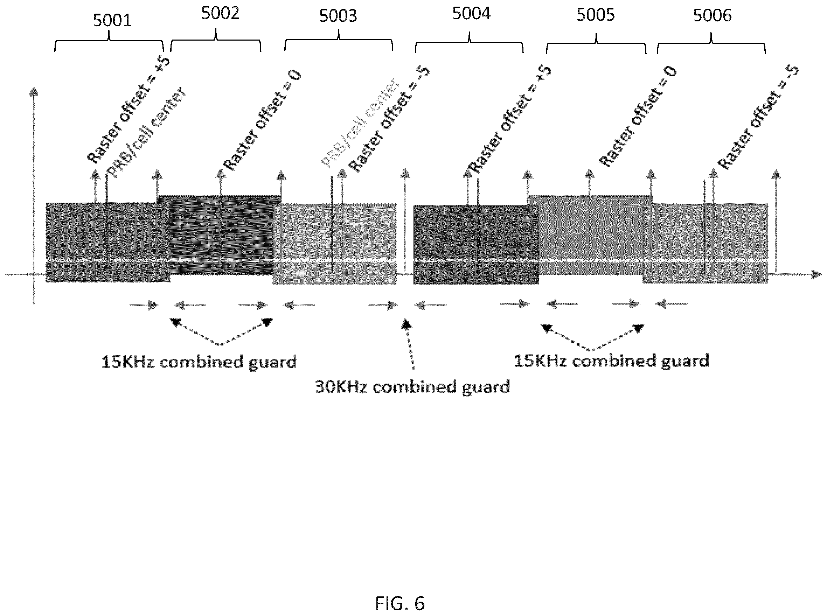

FIG. 6 is a diagram illustrating the combined guard regions among the consecutive NB-loT cells 5001-5006 shown in FIG. 5. As shown in FIG. 6, the following are provided as combined guard regions: i) 15Khz combined guard region between NB-loT cells 5001 and 5002; ii) 15Khz combined guard region between NB-loT cells 5002 and 5003; iii) 30Khz combined guard region between NB-loT cells 5003 and 5004; iv) 15Khz combined guard region between NB-loT cells 5004 and 5005; and v) 15Khz combined guard region between NB-loT cells 5005 and 5006.

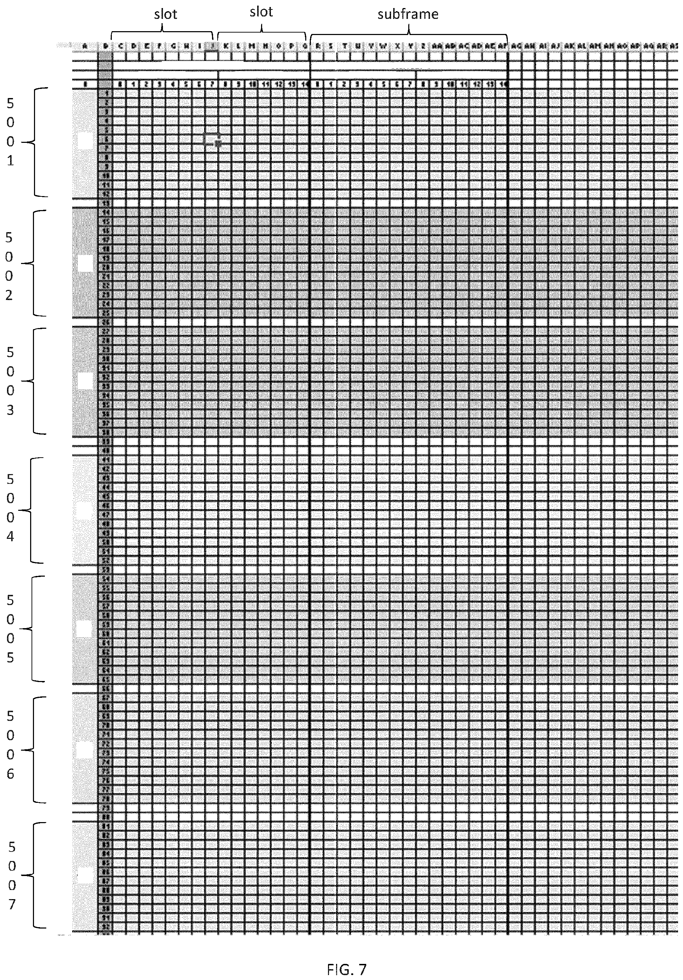

FIG. 7 illustrates a combined resource grid for 7 consecutive NB-loT standalone cells, which resource grid encompasses the configuration shown in FIG. 6. Referenced on the left side of FIG. 7 are the NB-loT standalone cells 5001-5007, each cell containing 12 utilized subcarriers (shaded), and the combined guard regions (shown unshaded) between adjacent NB-loT standalone cells. In FIG. 7, the 13^{th} row (unshaded) from the top corresponds to the 15KHZ combined guard region between NB-loT standalone cells 5001 and 5002; the 26^{th} row (unshaded) from the top corresponds to the 15KHZ combined guard region between NB-loT standalone cells 5002 and 50032; etc. Shown on top of the FIG. 7 are the divisions for individual slots and subframes, with each subframe containing two slots, and each slot containing multiple (e.g., 7) symbols. A resource block (RB), which is the smallest unit of resource that is allocated to a user, is 180 kHz wide (12 subcarriers, each 15KHz) in frequency and 1 slot long in time.

In order to accommodate and/or support the novel technique presented in the present disclosure, 3^{rd} Generation Partnership Project (3GPP) Technical Specification (TS) 36.331 can be modified, e.g., as follows:
i) ChannelRasterOffset-NB information element can be enhanced by adding the following additional components (underlined): 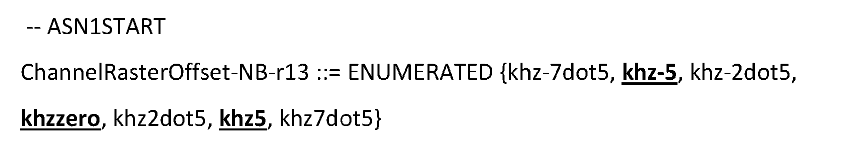
ii) MasterlnformationBlock-NB element can be enhanced by adding the following additional components (underlined):

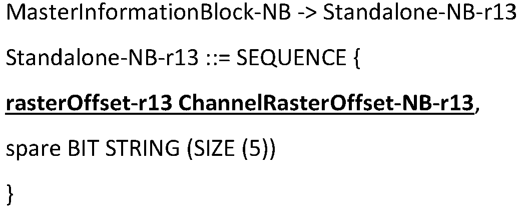

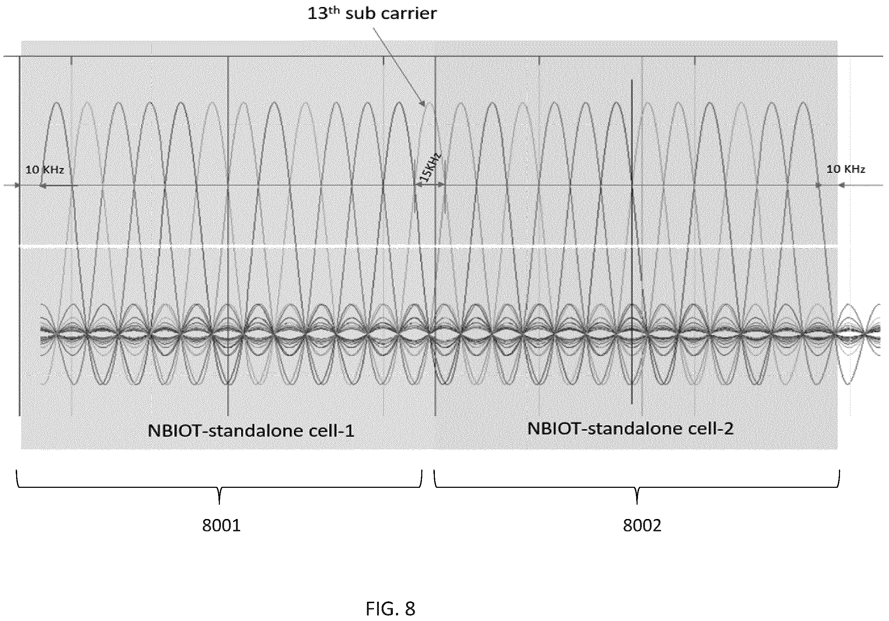

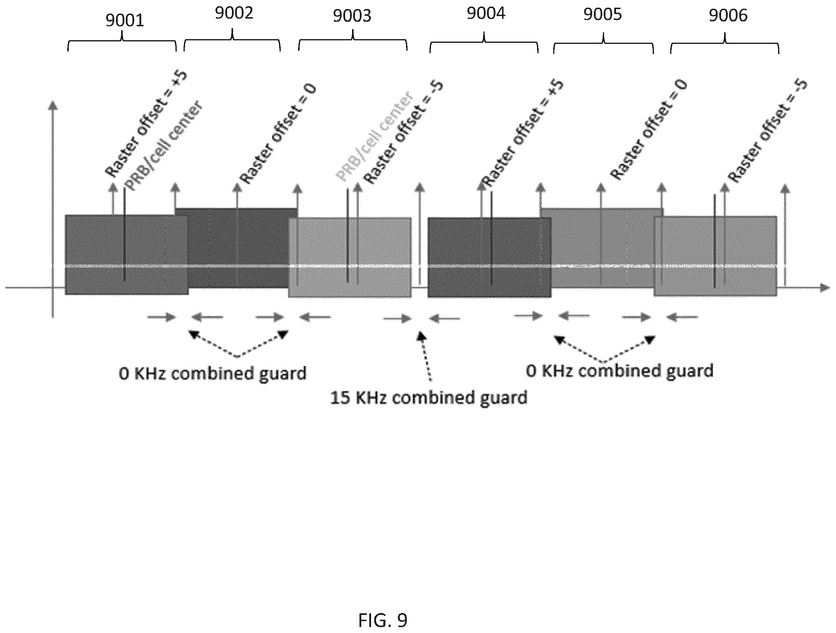

In the example embodiment illustrated in FIGS. 5-7, there is no cross interference among NB-loT standalone cells, and all the NB-loT standalone cells can be handled with the same FFT/iFFT. In this scenario, the combined (common) guard region between two NB-loT standalone cells can be utilized for an extra subcarrier (i.e., a 13^{th} subcarrier). FIG. 8 illustrates an example embodiment of the 13^{th} subcarrier in the combined (common) guard region between two NB-loT standalone cells 8001 and 8002. FIG. 9 illustrates the combined guard regions between adjacent NB-loT cells in the example case of using 13 sub carriers in NB-loT standalone cells. As shown in FIG. 9, the following configurations are provided for the sequence of six NB-loT cells 9001-9006: i) zero KHz combined guard region between NB-loT cells 9001 and 9002; ii) zero KHz combined guard region between NB-loT cells 9002 and 9003; iii) 15KHz combined guard region between NB-loT cells 9003 and 9004; iv) zero KHz combined guard region between NB-loT cells 9004 and 9005; and v) zero KHz combined guard region between NB-loT cells 9005 and 9006. The raster offsets for the configuration shown in FIG. 9 correspond to the raster offsets shown in FIGS. 5 and 6, i.e., NB-loT cells 9002 and 9005 are placed with 0 raster offset; NB-loT cells 9001 and 9004 are placed with +5KHz raster offset; and NB-loT cells 9003 and 9006 are placed with -5KHz raster offset.

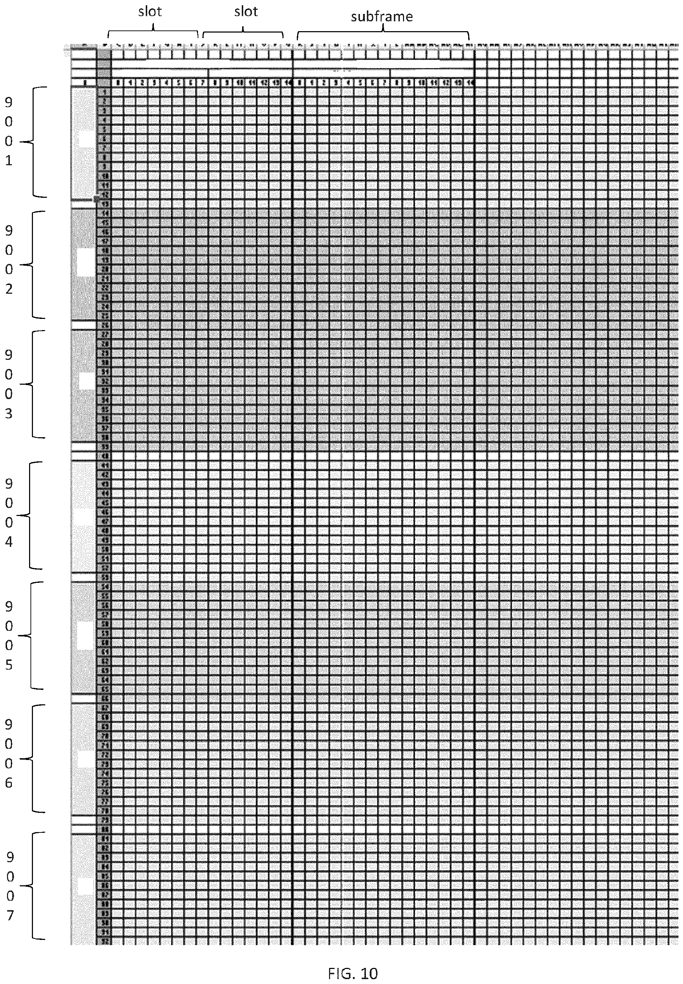

FIG. 10 illustrates a resource grid for 7 consecutive NB-loT standalone cells, which resource grid encompasses the configuration shown in FIG. 9. In comparison to the resource grid illustrated in FIG. 7, it can be seen in FIG. 10 that the combined guard regions among the NB-loT cells 9001-9007 are utilized for subcarriers, with the exceptions of i) a 15KHz band (unshaded) of the combined guard region between NB-loT cells 9003 and 9004, and ii) a 15KHz band (unshaded) of the combined guard region between NB-loT cells 9006 and 9007.

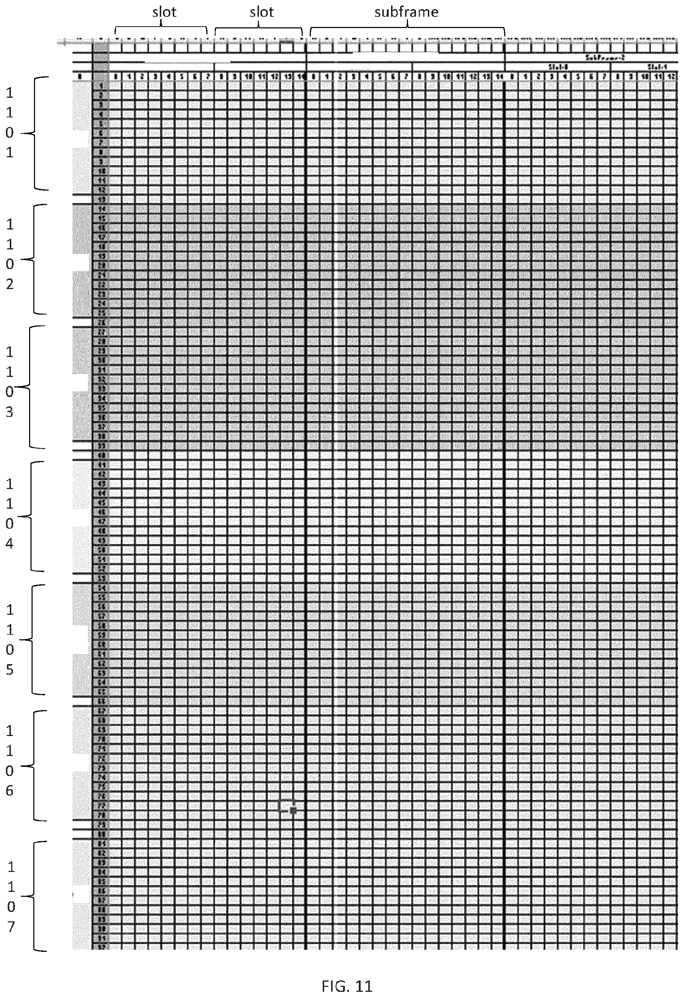

Given that one subcarrier is unused every 3 NB-IoT cells in the example configuration shown in FIGS. 9 and 10, there is a possibility of deploying the unused subcarrier as a further subcarrier (i.e., 14^{th} subcarrier) for an NB-loT cell. An example embodiment of a configuration in which a 14^{th} subcarrier is utilized for one or more NB-loT cell(s) is illustrated in FIG. 11. FIG. 11 shows a resource grid for 7 consecutive NB-loT standalone cells 1101-1107, which resource grid deviates from the resource grid shown in FIG. 10 by the additional inclusion of one further (i.e., 14^{th}) subcarrier for NB-loT cell 1104 and 1107. It should be noted that the 14^{th} subcarrier can be assigned to either one of the adjacent NB-loT cells, e.g., NB-loT cells 1103 and 1106 could have been assigned the 14^{th} subcarrier.

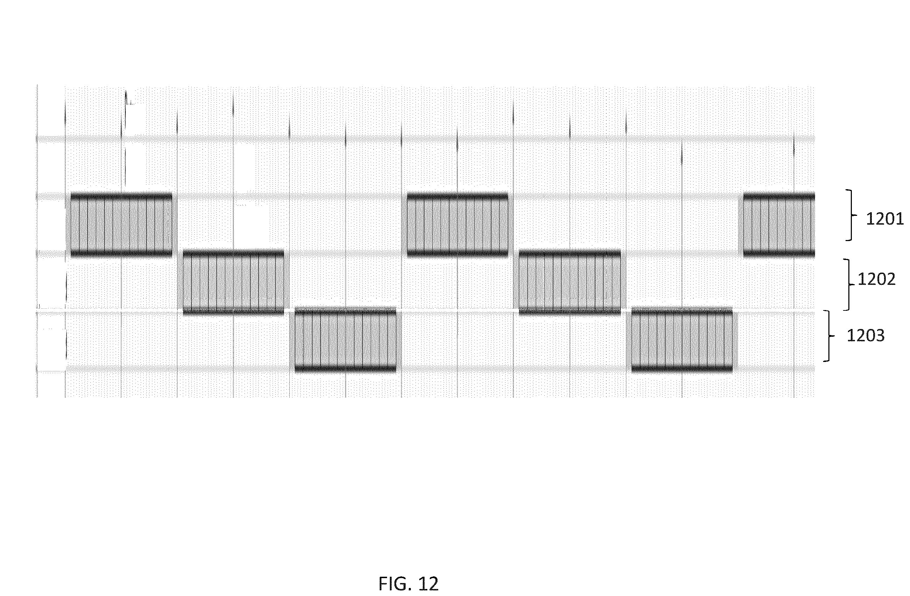

According to an example embodiment of the present invention, a method is presented in which the same fast Fourier transform (FFT) and/or corresponding inverse fast Fourier transform (iFFT) is used by the RAN for processing every third NB-loT standalone cell in a sequence of consecutive NB-IoT cells. All NB-loT standalone cells occupy 200 KHz, and subcarriers in every 3rd NB-loT cell are orthogonal to each other, i.e., align to the same grid, which means it is possible to use the same FFT/iFFT for every 3rd NB-IoT cell. In this example embodiment, which is illustrated in FIG. 12, at least one of the following configurations is provided for a sequence of NB-loT standalone cells sequentially positioned starting on the left: i) a first set of NB-loT standalone cells (referenced by 1201 in FIG. 12) having sequence position numbers with quotient-1 of modulo-3 operation is processed by the RAN using at least one of a first FFT and a corresponding first iFFT; ii) a second set of NB-loT standalone cells (referenced by 1202 in FIG. 12) having sequence position numbers with quotient-2 of modulo-3 operation is processed by the RAN using at least one of a second FFT and a corresponding second iFFT; and/or iii) a third set of NB-loT standalone cells (referenced by 1203 in FIG. 12) having sequence position numbers with quotient-0 of modulo-3 operation is processed by the RAN using at least one of a third FFT and a corresponding third iFFT.

## Claims

1. A method of processing multiple Narrowband Internet of Things, NB-loT, cells on
consecutive carriers by a Radio Access Network, RAN, for one of 4G or 5G mobile network, the method comprising:
providing a sequence of NB-loT cells on consecutive carriers;
grouping every third NB-IoT cell, starting from the first cell (1201), the second cell (1202), or the third cell (1203), into a single group,
wherein all sub carriers of the NB-loT cells in the single group are mutually orthogonal; and
using a single FFT or a single iFFT by the RAN to process multiple NB-loT cells in the single group formed from the every third NB-loT cell.

2. The method of claim 1, wherein:
for a sequence of NB-loT cells, every third NB-IoT cell is grouped into a single group, and all sub carriers of the NBIOT cells in the single group are mutually orthogonal; and
at least one of the following configurations is provided for the sequence of NB-IoT cells sequentially positioned: i) a first set of NB-loT standalone cells having sequence position numbers with quotient-1 of modulo-3 operation is processed by the RAN using at least one of a first FFT and a corresponding first iFFT; ii) a second set of NB-loT standalone cells having sequence position numbers with quotient-2 of modulo-3 operation is processed by the RAN using at least one of a second FFT and a corresponding second iFFT; and iii) a third set of NB-loT standalone cells having sequence position numbers with quotient-0 of modulo-3 operation is processed by the RAN using at least one of a third FFT and a corresponding third iFFT.

## Patentansprüche

1. Verfahren zum Verarbeiten mehrerer Schmallband-Internet der Dinge-Zellen, NB-loT-Zellen, auf aufeinanderfolgenden Trägern durch ein Funkzugangsnetz, RAN, für eines von einem 4G- oder 5G-Mobilfunknetz, das Verfahren umfassend:
Bereitstellen einer Sequenz von NB-IoT-Zellen auf aufeinanderfolgenden Trägern;
Gruppieren jeder dritten NB-IoT-Zelle, beginnend mit der ersten Zelle (1201), der zweiten Zelle (1202) oder der dritten Zelle (1203), in eine einzelne Gruppe,
wobei alle Unterträger der NB-IoT-Zellen in der einzelnen Gruppe zueinander orthogonal sind; und
Verwenden einer einzelnen FFT oder einer einzelnen iFFT durch das RAN, um mehrere NB-IoT-Zellen in der einzelnen Gruppe, die aus jeder dritten NB-IoT-Zelle ausgebildet wird, zu verarbeiten.

2. Verfahren nach Anspruch 1, wobei:
für eine Sequenz von NB-IoT-Zellen jede dritte NB-IoT-Zelle in eine einzelne Gruppe gruppiert wird, und alle Unterträger der NBIOT-Zellen in der einzelnen Gruppe zueinander orthogonal sind; und
mindestens eine der folgenden Konfigurationen für die Sequenz von sequenziell positionierten NB-IoT-Zellen bereitgestellt ist: i) ein erster Satz von eigenständigen NB-IoT-Zellen, die Sequenzpositionsnummern mit Quotient-1 einer Modulo-3-Operation aufweisen, wird durch das RAN unter Verwendung mindestens einer von einer ersten FFT und einer entsprechenden ersten iFFT verarbeitet; ii) ein zweiter Satz von eigenständigen NB-IoT-Zellen, die Sequenzpositionsnummern mit Quotient-2 der Modulo-3-Operation aufweisen, wird durch das RAN unter Verwendung mindestens einer von einer zweiten FFT und einer entsprechenden zweiten iFFT verarbeitet; und iii) ein dritter Satz von eigenständigen NB-IoT-Zellen, die Sequenzpositionsnummern mit Quotient-0 der Modulo-3-Operation aufweisen, wird durch das RAN unter Verwendung mindestens einer von einer dritten FFT und einer entsprechenden dritten iFFT verarbeitet.

## Revendications

1. Procédé de traitement de multiples cellules de l'Internet des objets à bande étroite, NB-loT, sur des porteuses consécutives par un réseau d'accès radio, RAN, pour l'un parmi un réseau mobile 4G ou 5G, le procédé comprenant :
la fourniture d'une séquence de cellules NB-loT sur des porteuses consécutives ;
le groupement de chaque troisième cellule NB-loT, en partant de la première cellule (1201), de la deuxième cellule (1202) ou de la troisième cellule (1203), en un groupe unique,
dans lequel toutes les sous-porteuses des cellules NB-loT dans le groupe unique sont mutuellement orthogonales ; et
l'utilisation d'une FFT unique ou d'une iFFT unique par le RAN pour traiter de multiples cellules NB-loT dans le groupe unique formé à partir de chaque troisième cellule NB-loT.

2. Procédé selon la revendication 1, dans lequel :
pour une séquence de cellules NB-loT, chaque troisième cellule NB-loT est groupée en un groupe unique, et toutes les sous-porteuses des cellules NB-loT dans le groupe unique sont mutuellement orthogonales ; et
au moins l'une parmi les configurations suivantes est fournie pour la séquence de cellules NB-loT positionnées séquentiellement : i) un premier ensemble de cellules NB-loT autonomes ayant des numéros de position de séquence avec un reste de 1 de l'opération modulo 3 est traité par le RAN à l'aide d'au moins l'une parmi une première FFT et une première iFFT correspondante ; ii) un deuxième ensemble de cellules NB-loT autonomes ayant des numéros de position de séquence avec un reste de 2 de l'opération modulo 3 est traité par le RAN à l'aide d'au moins l'une parmi une deuxième FFT et une deuxième iFFT correspondante ; et iii) un troisième ensemble de cellules NB-loT autonomes ayant des numéros de position de séquence avec un reste de 0 de l'opération modulo 3 est traité par le RAN à l'aide d'au moins l'une parmi une troisième FFT et une troisième iFFT correspondante.
